# EUROPEAN PATENT SPECIFICATION

(11) **EP 1 907 524 B1**
(45) Date of publication and mention of the grant of the patent: **21.03.2012**
(21) Application number: 06758834.3
(22) Date of filing: 02.05.2006
(51) Int. Cl.: C11D 17/00, C11D 17/04, C11D 3/386, C11D 3/37

(54) **BORATE RESISTANT FILMS**
BORATRESISTENTE FILME
FILMS RESISTANT AU BORATE

(30) Priority: 07.06.2005 US 147831
(43) Date of publication of application: 09.04.2008
(73) Proprietor: Sekisui Specialty Chemicals America, LLC, Dallas, TX 75234 (US)
(72) Inventor: VICARI, Richard, Pearland, Texas 77584-3163 (US)
(74) Representative: Kador, Utz Ulrich
(86) International application number: PCT/US2006/016586
(87) International publication number: WO 2006/132729

(56) References cited:
- US-A1- 2002 103 095
- US-A1- 2004 186 034
- US-A1- 2005 065 272

## Description

### FIELD OF THE DISCLOSURE

This disclosure relates to the use of water soluble films incorporating copolymers of vinyl alcohol and a sulfonic acid for packaging or encapsulating various products and compounds that may be released upon dissolving the film.

### BACKGROUND INFORMATION

Polyvinyl alcohol resins are widely used as a film forming material. Generally, the polymers have good strength and water solubility characteristics. Two factors affecting polyvinyl alcohol solubility are molecular weight and degree of hydrolysis. Commercially available films range in weight average molecular weight from about 10,000 to 100,000 g/mole. Percent hydrolysis of such commercial resins is generally about 70% to 100%. Because polymerizing vinyl acetate and subsequently hydrolyzing the polymer make polyvinyl alcohol, polyvinyl alcohol can and typically does include residual acetate groups. Thus, the term "polyvinyl alcohol", as used herein, includes vinyl alcohol and vinyl acetate copolymers. For solubility purposes, a high degree of hydrolysis, e.g., 95% renders the film relatively slowly soluble in water. Lower degrees of hydrolysis, e.g. 80-95%, improve solubility rates. In an alkaline environment, however, these films become relatively insoluble due to the continued hydrolysis of the partially hydrolyzed film. Higher molecular weight films generally exhibit the best mechanical properties, e.g., impact strength, although solubility rates may be reduced.

It is known to use polyvinyl alcohol polymers to package and/or encapsulate various products so that the products may be released from the packages or capsules when the polyvinyl alcohol films are dissolved in water. However, problems with the conventional polyvinyl alcohol films dissolving after exposure to certain compounds have been encountered. Numerous efforts to solve these problems have been undertaken.

U.S. Patent 4,885,105 to Yang et aL discloses the production of vinyl alcohol copolymers for use in water-soluble film applications. The films are produced by copolymerizing vinyl acetate with 2 mol% to 6 mol% of a comonomer. A wide variety of comonomers are identified, including carboxylic acids and salts thereof, carboxylic esters, amides, imides, acyl halides, anhydrides, and sulfonate. Unsaturated sulfonic acids are identified among the listed suitable comonomers.

U.S. Patent 6,166,117 to Miyazaki discloses the use of sulfonic acid modified polyvinyl alcohol films for packaging chemicals such as agricultural chemicals and microbiocides. The 6,166,117 patent discloses that the polyvinyl alcohol polymers may be modified by copolymerizing a vinyl ester and sulfonic acid or by the addition of a sulfonic acid group containing compound to polyvinyl alcohol. The 6,166,117 patent discloses that the sulfonic acid modified polyvinyl alcohol copolymer must be combined with gallic acid or a C₁₋₅ alkyl ester to make a film produced with the sulfonic acid modified polyvinyl alcohol soluble in water, otherwise the film will be insoluble in water. The 6,166,117 patent discloses that gallic acid or C1-5 alkyl ester must be present at concentrations of at least .05 parts by weight or the film will be insoluble in water.

Published U.S. Patent Application 2002/0103095 to Becker et al. discloses the use of modified polyvinyl alcohols to coat detergent enzyme granules. The polyvinyl alcohol is modified by reacting the polyvinyl alcohol with hydrophilic acids, amines, or thiols to substitute the various moieties into the polyvinyl alcohol. The application discloses that the coatings are water-soluble and resist crosslinking leading to water insolubility in the presence of certain chemical species such as sodium borate, sodium perborate, aldehydes, and certain dyes. A wide variety of moieties are identified for substitution onto the polyvinyl alcohol, including sulfonic acid. The application distinguishes the modified polyvinyl alcohol polymers as true modifications of polymers, as contrasted with copolymers of vinyl monomers and other monomers.
US 2005/0065272 A1 discloses a method of preparing aqueous dispersions selected from drilling fluids, hydraulic cement compositions and mineral pigment coatings.
US2004/0186034 A1 discloses water soluble copolymer film of vinyl acetate and a second monomer selected from polymers having carboxylate or sulfonate functionality.

### Brief description of the Disclosure

The disclosure relates to the use of claim 1. The polymers are designed so that the packaged and encapsulated products are released from the package or capsule after the polymer is placed in and dissolves in water or an aqueous solution. The water-soluble polymers are copolymers of vinyl alcohol units and sulfonic acid units selected from 2-acrylamido-2-methyl propane sulfonic acid; 2-methacrylamido-2-methyl propane sulfonic acid, and combinations thereof. The copolymers are produced at molecular weights and monomer incorporation levels providing improved water solubility characteristics in the presence of certain compounds, especially borate containing compounds. The use is particularly advantageous for packaging detergent products and encapsulating detergent components containing an enzyme. In the case of packaging detergent enzymes, the solutions of the polymers may be sprayed or misted onto enzyme particles to provide a polymeric coating encapsulating the particles.

It has been discovered that the polymers used for the packaging and encapsulations described herein perform better than the polymers disclosed in the prior art over a wide temperature range.

### Detailed Description

The disclosure relates to the use of claim 1. The polymers are designed so that the packaged and encapsulated detergent compositions including boron containing compounds are released from the package or capsule after the polymer package is placed in and dissolves in water. The polymers are copolymers of vinyl alcohol units and sulfonic acid units selected from 2-acrylamido-2-methyl propane sulfonic acid; 2-methacrylamido-2-methyl propane sulfonic acid, and combinations thereof. The polymers exhibit improved water solubility characteristics in the presence of certain compounds, especially borate containing compounds. The polymers are particularly useful for packaging enzyme components for detergents. Particles of such enzymes may be encapsulated with the films described herein by a variety of processes, including fluidized bed spray coatings, pan coating, micro-emulsion encapsulation, and other processes suitable for providing coatings on particles.

The films comprise 100 parts by weight of a first component selected from a copolymer comprised of vinyl alcohol units and sulfonic acid units selected from 2-acrylamido-2-methyl propane sulfonic acid; 2-methacrylamido-2-methyl propane sulfonic acid, and combinations thereof and comprises less than .05 parts by weight of a second component selected from the group consisting of gallic acid, salts of gallic acid, C₁₋₅ alkyl esters, and combinations thereof.

The copolymers comprising vinyl alcohol units and sulfonic acid units are distinguished from polymers and copolymers including vinyl alcohol units and which also incorporate other chemical moieties such as sulfonic acid groups by addition to the polymer backbone. Polymers and copolymers of this type are disclosed in published U.S. Patent Application 2002/0103095. The films disclosed herein incorporate the vinyl alcohol copolymers in which the sulfonic acid groups are polymerized into the polyvinyl alcohol polymer chain.

The 2-acrylamido-2-methyl propane sulfonic acid and 2-methacrylamido-2-methyl propane sulfonic acid monomers are found to be particularly useful for incorporation into the copolymers described herein. Sulfonic acid monomers such as allyl sulfonic acid and salts thereof are not useful because the molecular weights of the resulting copolymers are too low. Such copolymers provide coatings and films that have poor mechanical properties. Certain other sulfonic acids such as vinyl sulfonic acid are generally unsuitable from a solubility and economic viewpoint. Copolymers incorporating the 2-acrylamido-2-methyl propane sulfonic acid and 2-methacrylamido-2-methyl propane sulfonic acid monomers can be easily produced in a variety of molecular weights and monomer levels and are easily hydrolyzed. Moreover, the copolymers maintain the excellent mechanical properties exhibited by polyvinyl alcohol.

In addition to the sulfonic acid comonomer incorporated into the polyvinyl alcohol copolymers described herein, the copolymers described herein may also incorporate one or more other comonomers. Exemplary additional comonomers include C₁-C₈ esters of acrylic acid and methacrylic acid, unsaturated carboxylic acids, and hydrocarbon monomers. Examples of esters include methyl methacrylate, methyl acrylate, ethyl acrylate, butyl acrylate, and 2-ethylhexyl acrylate. Others include hydroxy esters such as hydroxyethyl acrylate. The additional monomers are typically incorporated at levels of 1 mol% to 10 mol%. In other embodiments, the additional monomers typically are incorporated at levels of 2 mol% to 8 mol%. In still other embodiments, the additional monomers typically are incorporated at levels of 4 mol% to 7 mol%. For purposes of this disclosure, when additional monomer units other than the vinyl alcohol and sulfonic acid units are incorporated into the polymers described herein, the polymer will still be referred to as a copolymer. In other words, the term copolymer shall refer to polymers incorporating the vinyl alcohol and sulfonic acid units, as described herein, as well as one or more additional types of monomer units.

It has been surprisingly found that polymers described herein are capable of being converted into pouches and coatings and exhibit storage stability while also being capable of dissolving rapidly in water over a wide temperature range. The films described herein are not deleterious to cleaning performance when used to package or coat detergents and detergent components.
As is the case with most commercial polyvinyl alcohol polymers, the copolymers for the films described herein may be produced by producing a precursor vinyl acetate copolymer. The synthesis of the precursor vinyl acetate copolymers can be conducted in solution, slay, suspension or emulsion type polymerizations. Rodriguez, in "Principles of Polymer Systems", p. 98-101, 403, 405 (McGraw-Hill, NY, 1970) describes bulk and solution polymerization and the specifics of emulsion polymerization. When preparing poly(vinyl acetate) by suspension polymerization for example, the monomer is typically dispersed in water containing a suspending agent such as polyvinyl alcohol and then an initiator such as peroxide is added. The unreacted monomer is removed and the polymer filtered and dried.

In one embodiment, polymerization of vinyl acetate and sulfonic acid conducted in methanol results in a paste-like product in which the acetate groups may be readily hydrolyzed to alcohol groups to produce polyvinyl alcohol segments. Reaction temperatures for forming copolymers of vinyl acetate and sulfonic acid are conventional. The reaction temperature can be controlled by the rate of catalyst addition and by the rate of the heat dissipation therefrom. Generally, it is advantageous to maintain a temperature from 50° C to 85° C. While temperatures as low as 0° C may be used, economically, the lower temperature limit is about 40° C.

The reaction time will vary depending upon other variables such as the temperature, the catalyst, and the desired extent of the polymerization. It is generally desirable to continue the reaction until less than about 0.5% of the comonomers remain unreacted. Under these circumstances, a reaction time of about 6 hours has been found to be generally sufficient for complete polymerization, but reaction times ranging from about 2 to 10 hours have been used, and other reaction times can be employed, if desired.

The hydrolysis of the vinyl acetate copolymers described herein can be accomplished using methods typically utilized for polyvinyl alcohol. Either acid or base hydrolysis or combinations thereof can be conducted to produce the copolymers described herein.

The hydrolysis often is conducted in several steps; the first step involving contacting the vinyl acetate copolymer with a catalytic amount of base such as potassium hydroxide and sodium hydroxide resulting in the hydrolysis of vinyl acetate groups.

For additional detail regarding polyvinyl alcohol production, see the books "Poly(vinyl alcohol): Properties and Applications", ed. by C. A Finch, John Wiley & Sons, New York, 1973, p. 91-120; "Poly(vinyl alcohol) Fibers" ed. by L Sokmuda, Marcel Dekker, Inc., New York, 1985, p.57-68. See, also F. L. Marten in the Encyclopedia of Polymer Science and Engineering, 2nd ed., Vol. 17, p. 167, John Wiley & Sons, New York, 1989.

The levels of incorporation of 2-acrylamido-2-methyl propane sulfonic acid monomer, Z-methacrylamido-2-methyl propane sulfonic acid monomer, and combinations thereof, into the polyvinyl alcohol copolymers described herein (hydrolyzed vinyl acetate/sulfonic acid copolymer) range from 1 mol% to 20 mol% of the sulfonic acid units. In other embodiments, the sulfonic acid units may be incorporated into the copolymers described herein at levels of 2 mol% to 10 mol%. In additional embodiments, the sulfonic acid units may be incorporated into the copolymers described herein at levels of 3 mol% to 10 mol%. In still other embodiments, the sulfonic acid units may be incorporated into the copolymers described herein at levels of 3 mol% to 8 mol%.

The level of incorporation of the vinyl alcohol units in the copolymers described herein may range from 80 mol% to 99 mol%. In other embodiments, the vinyl alcohol units may be incorporated into the copolymers described herein at levels of 90 mol% to 98 mol%. In additional embodiments, the vinyl alcohol units may be incorporated into the copolymers described herein at levels of 92 mol% to 97 mol%. In still other embodiments, the level of incorporation of the vinyl alcohol units may range from 100% of the balance of the polymeric material not derived from the sulfonic acid units in the various embodiments set forth above, to the balance of polymeric material not derived from the sulfonic acid monomers less up to 10 mol% of the polymeric material derived from the additional monomer units as described above. For purposes of this disclosure, references to levels of incorporation of the vinyl alcohol units in the copolymers described herein refers to the total of the vinyl alcohol units and the non-hydrolyzed vinyl acetate units remaining in the copolymers described herein.

The level of hydrolysis is from 90% to 100%.

In certain embodiments, the polyvinyl alcohol copolymers described herein have degree of polymerization of 300 to 4,000 and number average molecular weights of 13,300 to 400,000. In other embodiments, the polyvinyl alcohol copolymers described herein have a degree of polymerization of 1600 to 2600 and number average molecular weights of 70,000 to 116,000. In additional embodiments, the polyvinyl alcohol copolymers described herein have a degree of polymerization of 1000 to 2000 and number average molecular weights of 15,000 to 80,000. The copolymers described herein are characterized by a viscosity of between 3 mPas to 20 mPas (3cps and 20 cps). In additional embodiment, the copolymers described herein are characterized by a viscosity of between 3 mPas to 6 mPas (3 cps and 6 cps).

The polyvinyl alcohol copolymers described exhibit good water solubility characteristics but surprisingly, it has been found that the copolymers when used as films and coatings to package or encapsulate products, particles-, or granules, the copolymers exhibit low reactivity with sodium borate, sodium perborate and other boron-containing compounds. These properties are superior to polymers produced by addition of sulfonic acid units to polyvinyl alcohol backbones. These characteristics are particularly beneficial when the copolymers are used to package detergent compositions and detergent components according to claim 1. Many detergent compositions include boron-containing compounds for their beneficial cleaning properties.

One exemplary use of the copolymers described herein is to encapsulate detergent enzyme particles. Certain enzymes such as amylase, cellulase, oxidases, peroxidases, protease, transferases, dehydratases, reductases, hemicellulases, isomerases, and combinations thereof are used in detergent compositions to enhance the cleaning power of the detergents. In certain embodiments, the copolymers described herein may be used to coat particles of an enzyme selected from the group of protease, amylase, lipase, cellulase, and combinations thereof. A variety of problems may arise from handling such enzymes. For example, the enzyme particles are quite small and may be aspirated by workers making, handling, or using detergent compositions incorporating the enzymes or the enzymes themselves. To minimize the potential problems associated with exposure to the enzymes, it is desirable to coat the enzyme particles with water-soluble polymers to prevent direct contact with the surface of the enzyme particles. The enzymes are then released from the encapsulating coating when the coated particles are immersed in water such as when the detergent composition containing the enzyme particles is used such as by immersion in water filling a washing machine.

The enzyme particles typically range in size from 10 nm to 1 mm. The particles may be coated with the polyvinyl alcohol copolymers described herein by exposing the particles to a solution of the copolymers in a fluidized bed spray coater. The copolymers may also be applied by pan-coating and other techniques for building up a particle by adding consecutive layers on top of a starting core material. See U.S. Patent 5,324,649 to Arnold et al. for additional details regarding coating techniques and conditions. The particles may be coated by application in an aqueous solution containing about 5 wt.% copolymer. In certain embodiments, the coating composition is an aqueous solution incorporating 1 wt% to 10 wt% copolymer. In other embodiments, the coating composition is an aqueous solution incorporating 1-wt% to 10 wt.% copolymer. In still other embodiments, the coating composition is an aqueous solution incorporating 3 wt.% to 7 wt.% copolymer.

### Experimental Evaluations

The water solubility and borate resistance of certain polyvinyl alcohol copolymers described herein were evaluated by comparing the performance of the copolymers in water and borate solutions. To produce the copolymer tested, vinyl acetate was polymerized with 2-acrylamido-2-methyl propane sulfonic acid sodium salting free-radical polymerization. The resulting copolymer incorporated 4 mol% of the 2-acrylamido-2-methyl propane sulfonic acid monomer and a 4 wt.% solution of the copolymer had a viscosity of 4 to 5 cps at 20° C. The copolymer was hydrolyzed with NaOH to a level of 97% hydrolysis.

Films of various thicknesses of the copolymer were prepared as indicated in Tables I and II below. Sections measuring 2 x 3 mils of the various film thicknesses were placed in water and in a solution of 0.1% sodium tetraborate decahydrate. The time period required for each film to disintegrate and to dissolve in each solution is reported in Tables I and II. Disintegration time refers to the time at which the film first breaks. Dissolution time refers to the time it takes the film to dissolve.

**TABLE I - Water**

| Film (mil) | Disintegration (sec) | Dissolution (sec) |
|---|---|---|
| 2.0 | 21 | 47 |
| 2.0 | 18 | 45 |
| 2.4 | 25 | 53 |
| 2.0 | 19 | 41 |

**TABLE II - 0.1% tetraborate decahydrate**

| Film (mil) | Disintegration (sec) | Dissolution (sec) |
|---|---|---|
| 1.9 | 20 | 35 |
| 2.0 | 20 | 43 |
| 2.0 | 17 | 41 |
| 2.0 | 16 | 37 |

Reviewing the results of Tables I and II reveals that disintegration and dissolution times for the films in water and the 0.1 % tetraborate decahydrate solution were virtually the same, particularly for the 2.0 mil thickness films. These results indicate the copolymers described herein resist crosslinking when exposed to borates. Therefore, the copolymers exposed to bovates remain as freely dissolvable as when the copolymers are not exposed to borates.

Additionally, vinyl alcohol copolymer films incorporating 4 mol% 2-acrylamido-2-methyl propane sulfonic acid were evaluated in 5 wt% boric acid aqueous solutions. Films with thicknesses of 2.0 mils and 2.8 mils were tested Films produced from Celvol™ 310, a fully hydrolyzed polyvinyl alcohol polymer, commercially available from Celanese Chemicals, were used as comparisons. For comparison purposes, the films were also evaluated in pure water. The details of the results of the testing are reported in Table III.

**Table III - 5% boric acid**

| Polymer | Boric acid | Film thickness | Disintegration time | Dissolution time |
|---|---|---|---|---|
| Celvol™ 310 | 0 | 2.8 mil | 4 min 13 sec | 100 min not completely dissolved |
| Copolymer | 0 | 2.8 mil | 25 sec | 42 see totally dissolved |
| Celvol™ 310 | 5 wt% | 2 mil | Did not break | 120 min film remamed as one piece |
| Copolymer | 5 wt% | 2 mil | 45 sec | 120 sec totally dissolved |

The results reported in Table III indicate no evidence of gelation in the copolymer films. The comparative polyvinyl alcohol films demonstrated significant evidence of gelation as indicated as resistance to dissolution. With respect to the various ranges set forth herein, any upper limit recited may, of course, be combined with any lower limit for selected sub-ranges.

## Claims

1. Use of a film comprising
(i) 100 parts by weight of a first component selected from a copolymer comprised of vinyl alcohol units and sulfonic acid units derived from a sulfonic acid selected from the group consisting of 2-acrylamido-2-methyl propane sulfonic acid, 2- methacrylamido-2-methyl propane sulfonic acid, and combinations thereof;
wherein
the first component copolymer comprises from 80 mol% to 99 mol% of the vinyl alcohol units and from 1 mol% to 20 mol% of the sulfonic acid units; and
the first component copolymer has a viscosity of 3 mPas to 20 mPas (3 cps to 20 cps) and a degree of hydrolysis, expressed as a percentage of vinyl acetate units converted to vinyl alcohol units, in the range of from 9096 to 100%
and
(ii) less than 0.05 parts by weight of a second component selected from the group consisting of gallic acid, salts of gallic acid, C₁₋₅ alkyl esters, and combinations thereof
for packaging or encapsulating detergent compositions including boron-containing compounds.

2. The use according to claim 1 wherein the sulfonic acid units are derived from 2- acrylamido-2-methyl propane sulfonic acid.

3. The use according to claim 2 wherein the first component polymer comprises from about 3 mol% to about 10 mol% of the sulfonic acid units.

4. The use according to claim 1 wherein the sulfonic acid units are derived from 2- methacrylamido-2-methyl propane sulfonic acid.

5. The use according to claim 4 wherein the first component polymer comprises from 3 mol% to 8 mol% of the sulfonic acid units.

6. The use according to any one of claims 3 or 5 wherein the film is in the form of a coating.

7. The use according to claim 1 wherein the detergent composition includes an enzyme.

## Patentansprüche

1. Verwendung einer Folie, umfassend:
(i) 100 Gew.-Teile einer ersten Komponente, die aus einem Copolymer ausgewählt ist, das Vinylalkohol-Einheiten und Sulfonsäure-Einheiten aufweist, die von einer Sulfonsäure stammen, die aus der Gruppe ausgewählt ist, die aus 2-Acrylamido-2-methylpropansulfonsäure, 2-Methylacrylamido-2-methylpropansulfonsäure und Kombinationen davon besteht; wobei das Copolymer der ersten Komponente 80 bis 99 Mol-% der Vinylalkohol-Einheiten und 1 bis 20 Mol-% der Sulfonsäure-Einheiten umfaßt; und
das Copolymer der ersten Komponente eine Viskosität von 3 bis 20 mPa·s (3 bis 20 cps) und einen Hydrolysegrad im Bereich von 90 bis 100 % aufweist, und zwar als Prozentsatz der in Vinylalkohol-Einheiten überführten Vinylacetat-Einheiten angegeben;
und
(ii) weniger als 0,05 Gew.-Teile einer zweiten Komponente, die aus der Gruppe ausgewählt ist, die aus Gallsäure, Gallsäuresalzen, C₁₋₅-Alkylestern und Kombinationen davon besteht,
zum Verpacken und Verschließen von Waschmittelzusammensetzungen, die borhaltige Verbindungen einschließen.

2. Verwendung nach Anspruch 1, wobei die Sulfonsäure-Einheiten von 2-Acrylamido-2-methylpropansulfonsäure abgeleitet sind.

3. Verwendung nach Anspruch 2, wobei das Polymer der ersten Komponente etwa 3 bis etwa 10 Mol-% der Sulfonsäure-Einheiten umfaßt.

4. Verwendung nach Anspruch 1, wobei die Sulfonsäure-Einheiten von 2-Methacrylamido-2-methylpropansulfonsäure abgeleitet sind.

5. Verwendung nach Anspruch 4, wobei das Polymer der ersten Komponente 3 bis 8 Mol-% der Sulfonsäure-Einheiten umfaßt.

6. Verwendung nach einem der Ansprüche 3 oder 5, wobei die Folie in Form einer Beschichtung vorliegt.

7. Verwendung nach Anspruch 1, wobei die Waschmittelzusammensetzung ein Enzym aufweist.

## Revendications

1. Utilisation d'un film comprenant
(i) 100 parties en poids d'un premier composant choisi parmi un copolymère composé d'unités d'alcool vinylique et d'unités d'acide sulfonique dérivées d'un acide sulfonique choisi parmi le groupe consistant en acide 2-acrylamido-2-méthyl propane sulfonique, acide 2-méthacrylamido-2-méthyl propane sulfonique, et des combinaisons de ces derniers ;
où le premier composant copolymère comprend de 80 % en mole à 99 % en mole d'unités d'alcool vinylique et de 1 % en mole à 20 % en mole d'unités d'acide sulfonique ; et
le premier composant copolymère présente une viscosité de 3 mPa·s à 20 mPa·s s (3 cps à 20 cps) et un degré d'hydrolyse, exprimé en pourcentage d'unités d'acétate de vinyle converties en unités d'alcool vinylique, dans le domaine de 90 % à 100 % et
(ii) moins de 0,05 parties en poids d'un deuxième composant choisi parmi le groupe consistant en acide gallique, sels d'acide gallique, C₁₋₅ alkyl esters, et des combinaisons de ces derniers,
pour le conditionnement ou l'encapsulation de compositions détergentes comprenant des composés contenant du bore.

2. Utilisation selon la revendication 1, dans laquelle les unités d'acide sulfonique sont dérivées de l'acide 2-acrylamido-2-méthyl propane sulfonique.

3. Utilisation selon la revendication 2, dans laquelle le premier composant polymère comprend d'environ 3 % en mole à environ 10 % en mole d'unités d'acide sulfonique.

4. Utilisation selon la revendication 1, dans laquelle les unités d'acide sulfonique sont dérivées de l'acide 2-méthacrylamido-2-méthyl propane sulfonique.

5. Utilisation selon la revendication 4, dans laquelle le premier composant polymère comprend de 3 % en mole à 8 % en mole d'unités d'acide sulfonique.

6. Utilisation selon l'une quelconque des revendications 3 ou 5, dans laquelle le film est sous la forme d'un revêtement.

7. Utilisation selon la revendication 1, dans laquelle la composition détergente comprend une enzyme.
